# EUROPEAN PATENT APPLICATION

(11) **EP 4 060 539 A1**
(43) Date of publication of application: **21.09.2022**
(21) Application number: 22162942.1
(22) Date of filing: 18.03.2022
(51) Int. Cl.: G06F 21/57, G06Q 20/40

(54) **REAL-TIME MALICIOUS ACTIVITY DETECTION USING NON-TRANSACTION DATA**

(30) Priority: 19.03.2021 US 202163163088 P; 02.06.2021 US 202163195808 P; 17.03.2022 US 202217697239
(71) Applicant: Accenture Global Solutions Limited, Dublin 4 (IE)
(72) Inventor: DASHTI, Marzieh, Dublin. D15HX60 (IE); RECAVARREN, Eduardo Martin, 27502 Apex (US); GARCIA MEJIAS, Carlos Miguel, Dublin. D01 KX21 (IE); LEVY, Laura Shoshana, Washington 20002 (US); SHIVHARE, Gaurav, Dublin. D01 DD53 (IE); LARKIN, Mel, Co. Roscommon (IE); MUELLER, Elizabeth, Dublin. D07 C1F2 (US)
(74) Representative: Swindell & Pearson Limited

(57) **Abstract**

This document describes a computer-implemented method that includes storing information in a standardized format about an organization's susceptibility to social engineering in a plurality of network-based, non-transitory storage devices having a collection of social engineering risk indicators stored thereon; importing, using an integration layer, non-standardized updated information about the organization from one or more data sources; converting, using a first analytics engine, the non-standardized updated information into the standardized format; and transmitting, via the integration layer, the standardized updated information for one or more organizations to a second analytics engine configured to determine a transaction risk indicator for a transaction.

## Description

### CROSS-REFERENCE TO RELATED APPLICATIONS

This application claims the benefit of U.S. Patent Application No. 63/163,088, filed March 19, 2021, and U.S. Patent Application No. 63/195,808, filed June 2, 2021, which are incorporated herein by reference.

### TECHNICAL FIELD

This specification generally relates to data processing and malicious activity detection.

### BACKGROUND

Malicious activity can take many forms and is often found in the context of making payments. One form of malicious activity is commonly referred to as social engineering. Social engineering uses deceit and manipulation to convince individuals to share information that is later used to perpetrate payment fraud. For instance, fraudsters convince an individual to authorize a legitimate payment through a bank or other payment institution. As the transaction appears legitimate, such instances of fraud can be difficult to detect.

### SUMMARY

Implementations of the present disclosure are generally directed to systems and methods for detecting malicious activity using non-transaction data. Some implementations can provide an analytics engine that can be integrated into an existing payment system to analyze non-transaction data in parallel to the execution of real-time transactions, thereby increasing the speed and efficiency of the analyses.

According to a first aspect, implementations of the present disclosure are directed to a computer-implemented method that includes storing information in a standardized format about an organization's susceptibility to social engineering in a plurality of network-based, non-transitory storage devices having a collection of social engineering risk indicators stored thereon; importing, using an integration layer, non-standardized updated information about the organization from one or more data sources; converting, using a first analytics engine, the non-standardized updated information into the standardized format; storing the standardized updated information about the organization's susceptibility to social engineering in the collection of social engineering risk indicators; and transmitting, via the integration layer, the standardized updated information for one or more organizations to a second analytics engine configured to determine a transaction risk indicator for a transaction. Other implementations of this aspect include corresponding systems, apparatus, and computer programs, configured to perform the actions of the methods, encoded on computer storage devices.

In some implementations, the one or more data sources comprise non-transaction data sources. Some implementations can include receiving, via the integration layer, a request for updated information about the organization, wherein the non-standardized updated information about the organization is imported from one or more data sources in response to the request.

The non-standardized updated information about the organization can be imported from one or more data sources based on a pre-determined schedule. For example, the non-standardized updated information can include information from at least two data sources, and updated information can be imported from each of the at least two data sources based on a different pre-determined schedule.

Implementations can include receiving a transaction request related to the organization, and importing non-standardized updated information about the organization from one or more data sources can include selecting one or more data sources to query based on the transaction request.

Some implementations include performing an action based on the transaction risk indicator, e.g., temporarily blocking the transaction when the transaction risk indicator exceeds a risk threshold. Other implementations can additionally include transmitting, via the integration layer, the standardized updated information for one or more organizations for display on a user interface.

It is appreciated that methods in accordance with the present disclosure can include any combination of the aspects and features described herein. That is, for example, apparatus and methods in accordance with the present disclosure are not limited to the combinations of aspects and features specifically described herein, but also may include any combination of the aspects and features provided.

The subject matter described in this specification can be implemented in particular embodiments and may result in one or more of the following advantages. Implementations of the present disclosure incorporate data, including unstructured data, from non-transaction sources and may improve the detection of social engineering and payment fraud. Fraud based on social engineering can be difficult to detect using conventional techniques, e.g., anomaly detection. Risk indicators based on non-transaction data sources can be transmitted to systems used to detect fraud. Non-transaction data is often stored locally on a computer or server in a non-standard format, leading to fragmented or incomplete data that cannot be processed by the banking fraud detection systems in real time. Processing delays can lead to delays in the execution of transactions. Conversely, some instances of non-transaction data may be duplicative, overtaxing the processors of the system and consuming unnecessary bandwidth to transmit the data. In some instances, efforts to consolidate data from non-canonical or incomplete data sources may lead to non-fraudulent transactions being flagged and/or fraudulent transactions not being detected. The described techniques can allow the fraud detection system to dynamically select data sources based on, e.g., variations detected in transaction data, and obtain appropriate data for determining one or more risk indicators to detect fraudulent transactions.

The details of one or more implementations of the present disclosure are set forth in the accompanying drawings and the description below. Other features and advantages of the present disclosure will be apparent from the description, drawings, and claims.

### BRIEF DESCRIPTION OF DRAWINGS

FIG. 1 is a schematic overview of an environment in which an analytics engine generates one or more risk indicators based on data from one or more data sources.
FIG. 2 depicts an example system that can include the analytics engine of FIG. 1.
FIG. 3 is a flow diagram of an example process for detecting malicious activity using non-transaction data.
FIG. 4 is a schematic diagram of a computing system that can be used in connection with computer-implemented methods described in this document.

### DETAILED DESCRIPTION

Implementations of the present disclosure are generally directed to systems and methods for malicious activity detection. For example, implementations of the present disclosure can provide solutions to mitigate fraud, e.g., payment fraud, that can arise from social engineering. In some cases, a sender may be deceived into making a payment under false pretenses. For example, a scammer may imitate a merchant or vendor known to the sender and send the sender a fraudulent invoice with the scammer's bank details. The sender may authorize a payment to the scammer's bank, unaware that the invoice is fraudulent. Implementations of the present disclosure incorporate data, including unstructured data, from non-transaction sources and may improve the detection of social engineering and payment fraud in many instances.

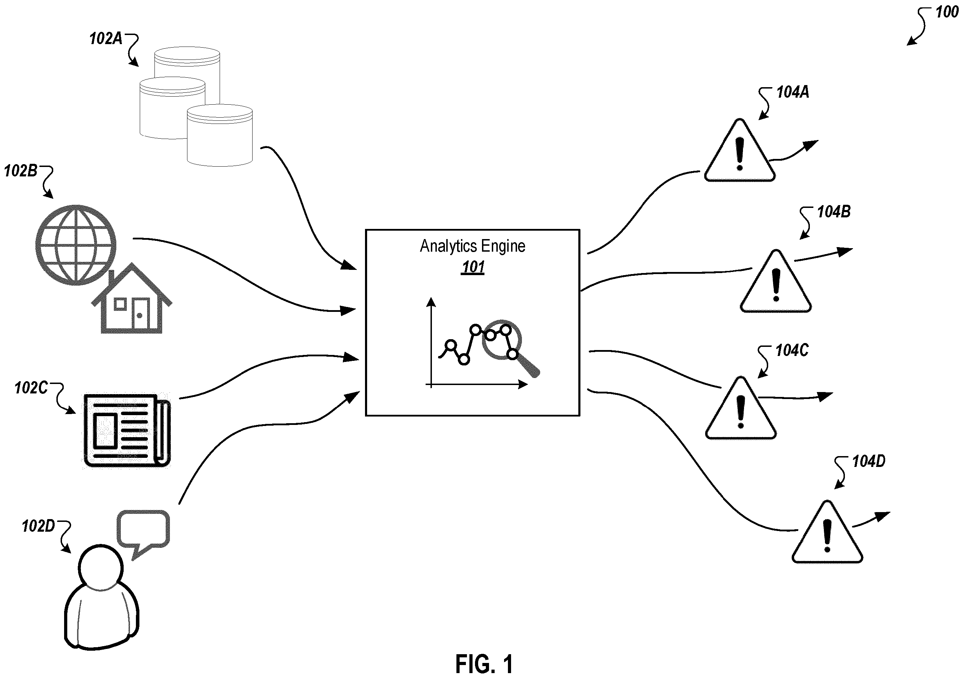

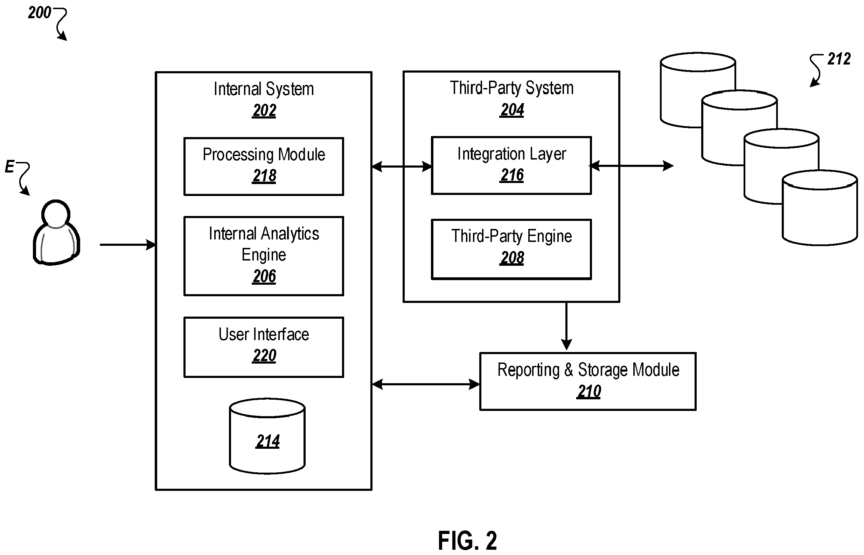

FIG. 1 depicts a schematic overview of an environment 100 in which an analytics engine 101 generates one or more risk indicators based on data from one or more data sources 102A-102D. The data sources 102A-102D can include non-transaction data, i.e., data that is unrelated to a specific financial transaction. For example, non-transaction data can be used to describe data that is not held by the financial institutions (e.g., banks) that process transactions. The analytics engine 101 can be configured to ingest non-transaction data from the one or more sources 102A-102D via an application programming interface (API) or other type of interface (not shown in FIG. 1). The analytics engine 101 is configured to use logical rules and/or apply predictive analytics and/or descriptive analytics techniques to the ingested data and determine one or more risk indicators 104A-104D that may indicate the likelihood of malicious activity, such as social engineering fraud in relation to a specific organization. For example, the risk indicators 104A-104D can be used by banks in systems for detecting fraudulent payments, as described below in reference to FIG. 2.

In some implementations, the analytics engine 101 can include risk models that are used to output one or more of the risk indicators 104-104D. For example, the risk indicators 104A-104D can be used to describe one or more of the following risks: an organization's overall risk or susceptibility to socially engineered fraud, a time-dependent risk related to a major planned transaction, risk dependent on employee public visibility, risk related to past or present security breaches, cyber intrusion vulnerability, and a legitimacy indicator. In some cases, the risk indicators can include a qualitative categorization, e.g., "high," "medium," or "low." The categorization can be based on logical rules as described in more detail below. In some examples, the risk indicators 104A-104D can be a quantitative risk score based on a risk model. A quantitative risk score can be expressed numerically, e.g., in percent or within a particular range. In some examples, the plurality of risk indicators 104A-104D can include a mix of qualitative and quantitative risk indicators. In some cases, a risk indicator 104A-104D can include multiple sub-indicators. The sub-indicators can be stored and evaluated individually or combined to obtain an aggregate risk-indicator 104A-104D. The process for aggregating sub-indicators may use logical rules similar to those described below.

Example data sources 102A-102D can include databases 102A (e.g., commercial databases), information available on the internet 102B, media sources 102C, and social media 102D. Other appropriate data sources can also be used. Although the data sources 102A-102D are depicted as distinct sources of data, in some implementations, there may be overlap. Further, some implementations of the analytics engine 101 may not rely on all the depicted sources of data. For example, the analytics engine 101 may retrieve data solely from databases 102A. Some of the data can be unstructured data, e.g., the data from the internet, media sources, and social media. Unstructured data can refer to information that is not stored in a pre-defined manner. Unstructured data can include audio, video, images, and text, e.g., news articles, reports, e-mails, social media posts, dates, and numbers to name a few examples. Depending on the format of the raw data, the engine 101 can be configured to extract text data from raw data, e.g., using optical character recognition (OCR) or text-to-speech techniques. For example, an OCR engine such as Tesseract can be used to convert image data into text. Text data can be processed using natural language processing (NLP) techniques. For example, snippets of text may be fed into NLP models, such as a word embedding, using the GloVe algorithm to extract data points that can be processed to obtain one or more risk indicators. For example, such techniques can be used to find information on key employees of an organization, such as employees in the financial department or employees (e.g., officers) authorized to act on behalf of the organization.

When initially retrieved from the respective sources 102A-102D, the raw data may not be useful for identifying malicious activity. For example, data in the sources 102A-102D may indicate the type of legal entity or how long an organization has been operating. These data points, as such, may not directly indicate a likelihood of malicious activity. However, the analytics engine 101 is configured to use a combination of logical rules, risk models, and/or other appropriate techniques (e.g., predictive and/or descriptive analytics) with the raw data to generate, e.g., compile, the one or more risk indicators. Predictive analytics describes statistical techniques from data mining, predictive modelling, and machine learning to analyze current and historical data to make predictions about future or otherwise unknown events. Descriptive analytics can include the use of statistical techniques to analyze historical data. In some instances, the analytics engine 101 can be configured to apply artificial intelligence (AI) and machine learning (ML) techniques for risk modeling to the raw data. Example techniques can include classification, regression, decision trees, and neural networks.

As described above, the analytics engine 101 can aggregate and apply one or more logical rules to the raw data ingested from the data sources 102A-102D. For example, the logical rules can depend on a specific risk indicator. Logical rules can be based on industry domain knowledge and arranged in a hierarchy to obtain a risk category (indicator) based on certain raw data. For example, the general risk indicator may depend on an organization's location, an overall risk tied to the industry in which the organization is involved, whether the organization is an importer, and/or the organization size. These factors can be arranged in a tree diagram that associates each combination of factors with a pre-determined risk category. In order to determine the location, the analytics engine 101 may rely on an address database that contains the headquarter addresses for various companies. For example, the analytics engine 101 can search the address database using the name of the organization to obtain the headquarter address. For the organization size, the analytics engine 101 may aggregate information on the number of employees, yearly revenue, whether the organization is listed, e.g., on an exchange, and/or other appropriate information. In some cases, the analytics engine 101 may augment logical rules with predictive and descriptive analytics techniques to determine a particular risk indicator. The techniques can include one or more of descriptive analytics techniques, diagnostics (e.g., root cause analysis and data mining) and predictive analytics techniques (e.g., forecasting models).

In some cases, the engine 101 can apply logical rules and/or ML techniques to risk-related raw data. In this case, raw data from databases 102A can include a metric on the risk of doing business in a particular country. For instance, raw data from the database 102A may indicate the country in which the headquarters of an organization is located to have a high risk based on political, commercial, legal, and/or macroeconomic factors. The engine 101 can be configured, e.g., to balance this country-level data point with other raw data indicating that the organization does business in an industry known for low levels of corruption and has been in operation for several decades. Thus, the general risk indicator associated with the specific organization may be lower than the information taken from the database 102A.

The engine 101 can also use risk models to process the raw data to obtain one or more risk indicators 104A-104D. For example, the data source 102A can optionally include payment transaction data in addition to non-transaction data. For example, transaction data can include the time of the transaction, the place where the transaction occurred, information identifying the sender (e.g., the organization or other entity making the payment), information identifying the receiver (e.g., the organization or other entity receiving the payment), and the payment method (e.g., bank transfer). The transaction data can be labeled as fraudulent or non-fraudulent. The engine 101 can filter one or more data sources 102A-102D for non-transaction data with a timestamp near the timestamp of the labeled transaction data to train the risk model to identify fraudulent transactions based on non-transaction data. For example, supervised learning techniques such as neural networks, linear regression, or the K-nearest neighbor algorithm can be used to train the risk model. In some cases, the engine 101 can use logical rules to process some raw data and one or more risk models to process other types of raw data.

In addition to the examples described above, the risk indicators 104A-104D can include one or more of the following:

Planned transaction risk is a time-sensitive risk indicator that may be based on two elements. The first element can account for publicly available information about the organization itself (e.g., the sender). The second element can account for publicly available information on companies that are doing business with the sender. For example, if media reports indicate that the sender is engaging in a large construction project in a certain timeframe, the risk indicator for wholesale payment compromise may increase during the timeframe of that project. If the media reports identify contractors and suppliers by name, the likelihood of fraudsters impersonating the contractors and suppliers may increase even further. For example, the corporate public visibility risk indicator can be used to create a list of potential receivers that lists a "targetability score" for each receiver.

Employee public visibility is a risk indicator that may be used to assess the amount of publicly available information (e.g., on the internet) about an employee involved in a particular transaction. Employee public visibility may also account for the amount of publicly available information about executives and officers of the organization who are authorized to enter into agreements on behalf of the organization.

Breach status is a risk indicator that may indicate past or present breaches of an organization based on wholesale payment compromise. For example, if a sender has previously been breached or has been a victim of fraud, the sender is more likely to be targeted again and may therefore have a higher breach status risk.

Cyber intrusion vulnerability is a risk indicator that may be used to indicate the protections in place and how easy such protections can be penetrated. For example, social engineering may be based on phishing attacks, and risk of attacks can increase as fraudsters are able to access the organization's technical information. For example, if fraudsters gain access to information about the type/version of software used by the organization, they may breach the target organization, thus increasing the likelihood of social engineering attacks and resulting in a higher cyber intrusion vulnerability risk indicator.

Organizational legitimacy is a risk indicator that incorporates a number of factors, such as legal information and important dates, which could in turn be used to identify social engineering fraud. One example element or sub-indicator of organizational legitimacy may be new organization legitimacy. New organization legitimacy is based on the premise that newly created companies may be easier to impersonate for a fraudster than companies that have existed for a longer period of time. For instance, smaller organizations can lack sophisticated security infrastructure and practices and have limited resources (financial and personnel) to devote to develop and implement control systems to manage and respond to threats. Smaller companies often lack in-house internal audit functions and are exempt from external audit requirements. Accordingly, some cyber criminals view small and mid-sized organizations as soft targets. In order to generate the sub-indicator for new organization legitimacy, the engine 101 can retrieve raw data indicating the number of employees and organization age via the API. The engine 101 can classify the data into one of three categories by calculating a ratio of the number of employees to organizational age and comparing the calculated ratio to pre-determined thresholds. For example, a ratio of equal to or below 6 can be an indicator of low risk (an established organization). A high risk can be indicated by a ratio above 96 (a new organization). Medium risk can be indicated by a ratio between 6 and 96 in this example. The pre-determined thresholds of 6 and 96 are only described by way of example and may differ based on the industry. Although this example uses the number of employees and the length of operation, other examples can incorporate revenue to identify small and medium-sized organizations.

The engine 101 can also use machine learning techniques such as clustering to identify small, medium, and large organizations. For example, the k-means algorithm can be used to assign data to clusters that form small, medium, and large organizations. The organizations can also be plotted according to the number of employees and the duration of operation. However, other metrics, such as revenue versus duration of operation, can also be used. When applying machine learning techniques, the engine 101 can be configured to filter a set of data to which the algorithms are applied. For example, the clustering algorithm can be applied to all vendors suppling a certain type of product or service.

In some instances, the engine 101 is configured to retrieve updated data from the data sources 102A-102D based on a pre-determined interval (e.g., daily, weekly, or bi-weekly). The engine 101 can apply the predictive and descriptive analytics techniques to the updated data to update the one or more risk indicators 104A-104D. In many cases, the update interval will differ according to the data source or the type of data. For instance, the address of an organization's headquarters is unlikely to change as frequently as revenue.

In some cases, the engine 101 can be configured to retrieve updated data from one or more data sources in response to an event or an external request. For example, the engine 101 can receive input from an event monitoring service that provides information relating to legal or financial events. When the engine 101 receives an event notification for a particular organization, the engine 101 can be configured to retrieve updated information pertaining to that organization. In some cases, the engine 101 can retrieve updated information based on an external request for one or more risk indicators 104A-104D pertaining to a particular organization. Such an external request may be generated by a banking system, as described in more detail in reference to FIG. 2. For example, the engine 101 can be configured to select which types of data are updated in response to an event notification or external request, e.g., data that have a tendency to frequently change. Other types of data (e.g., the address of the headquarters) may not be refreshed, since they change less frequently.

As described in further detail herein, implementations of the present disclosure can be used in systems for analyzing real-time transaction data to detect actual instances or potential instances of malicious activity. Example malicious activity can include social engineering. More particularly, implementations of the present disclosure are directed to processing of non-transaction data to detect potential instances of malicious activity, e.g., the data sources 102A-102D described above. Non-transaction data, e.g., non-banking data is distinct from data that is held by banks and financial institutions, e.g., data relating to financial transactions. In some examples, the non-transaction data is representative of an organization's susceptibility to enterprise compromise (e.g., social engineering). More particularly, implementations of the present disclosure are directed to processing of non-transaction data to detect instances of malicious activity.

Implementations of the present disclosure are described in further detail herein with reference to an example payment system. Participants of the example system include a bank, a third-party that analyzes data sources to identify potentially fraudulent transactions and vulnerable sender and receiver (e.g., payee) accounts, and external databases. It is contemplated, however, that implementations of the present disclosure can be realized for other participants and institutions. For example, a bank may be replaced by a provider of real-time payment services. In some implementations the third-party may not rely on services and data sources held by external vendors.

In some examples, real-time describes actions that can be automatically executed, without requiring human input and without any intentional delay, taking into account the processing limitations of the data input service, and any time required to process data and/or transfer data over a network.

FIG. 2 depicts an example system 200 that can include the analytics engine 101 of FIG. 1. In some cases, the system 200 can include internal systems 202 of an organization (e.g., a bank's systems) and third-party systems 204 that are operated by separate entities that are different from the organization. As shown in FIG. 2, some implementations include a first analytics engine, such as a bank's internal analytics engine 206, and a second analytics engine, such as a third-party fraud detection and prevention engine 208. For example, the third-party fraud detection and prevention engine 208 can be the analytics engine 101 described in reference to FIG. 1. Some implementations also include an optional reporting and storage module 210 that is described in more detail below.

As described in reference to the analytics engine 101, the third-party fraud detection and prevention engine 208 can be configured to determine one or more risk indicators associated with a particular organization based on non-transaction data sources. For example, the organization can be an account holder of the bank that has initiated a payment, and the bank can use the risk indicator to determine whether to execute the payment. As described in more detail below, the predictive analytics is based on a data source 212 that is separate from the bank's own data sources 214. In some implementations, the predictive analytics may also be based on output from the bank's internal analytics engine 206. Therefore, in some implementations, the security of payment transactions may be improved.

In some implementations, the third-party engine 208 is configured to communicate with and retrieve data from one or more data sources 212 that are not under control of the bank. For example, the data sources 212 can include any of the data sources 102A-102D depicted in FIG. 1. The data sources 212 can include one or more of a database on incorporated companies, a web indexing program, a proprietary historical database controlled by the third-party, and future data sources. In some cases, the data sources 212 include unstructured data. While structured data is defined in terms of data type and format, unstructured data does not have a pre-defined format or organization. Thus, in some implementations, the third-party engine 208 is configured to deconstruct transaction data received from the bank to determine the appropriate data sources to query. After receiving the queried data, the engine is configured to reconstruct the received data to perform predictive analysis. In some implementations, the system 200 may achieve a latency, e.g., of less than 50 milliseconds that is compatible with the technical requirements of a payment system.

For example, the reporting and storage module 210 may be configured to store a plurality of risk profiles that each describe a sender's vulnerability to malicious activity (e.g., vulnerability to social engineering tactics that can be employed to execute malicious activity). For example, a risk profile can include one or more risk indicators determined according to the techniques of the present disclosure. The third-party engine can update the risk profile for a particular sender according to a pre-determined schedule (e.g., once a week or every three days). The risk profile may be stored in data storage and accessed by the internal analytics engine 206 to determine an individual transaction risk of a transaction that involves the sender.

In order to communicate with the bank systems 202 and external data sources 212, the engine may be include an integration layer 216 that coordinates incoming and outgoing requests for data. In some cases, the integration layer 216 can enable the system 200 to be expanded to include additional or future data sources 212, as depicted in FIG. 2. In some instances, the integration layer 216 allows the engines 208, 101 to be hosted externally from the bank's systems, e.g., in a cloud-based system.

In some implementations, the bank's internal analytics engine 206 and the third-party fraud detection and prevention engine 208 are designed to work in parallel to one another. For example, the internal analytics engine 206 may calculate a risk indicator or determine a decision on the riskiness of the transaction while the third-party engine 208 provides one or more risk indicators related to the transaction. Parallel processing may further improve system latency and compatibility with existing payment systems.

In some examples, the reporting and storage module 210 can be included as part of the third-party system 204 and operate, e.g., as data storage for the third party system 204. In other examples, the reporting and storage module 210 may be included as part of the bank's infrastructure, e.g., part of the internal system 202. The third party engine 208 (or a separate analytics engine that is part of the reporting and storage module 210) can compile risk profiles for multiple organizations as described above. The engine can store the profiles on the module 210 and update the profiles according to a predetermined schedule. The bank's internal analytics engine 206 can access the profiles stored on the module 210 without sending a request through the third-party system 204 in many cases. In some cases, the internal system 202 can send a request to the third-party system 204 for updated risk indicators when, e.g., the risk profile stored on the module 210 is determined to be outdated.

The following example process can be executed when an organization, i.e., the sender, determines to make a payment such as a bank transfer to a vendor, i.e., the receiver. For example, the payment can be payment for an invoice for goods and services issued by the vendor. An employee (E) of the sender can initiate a request for a transfer of funds via bank's user interface. In some instances, the request can include the vendor's name, bank account details, the amount of money to be transferred from the organization's account. The bank can process the transaction request using a processing module 218 and prepare for the transfer of funds from the organization's account to the indicated bank account. Simultaneously, the bank can send a third-party analytics request to the third-party engine 208.

In some implementations, the bank can initiate a third-party analytics request for all transactions. In other implementations, the bank may only send a third-party analytics request for specific transaction requests. For example, the bank can initiate a third-party analytics request for all transactions requested by specific organizations. In another example, the bank may compare the amount of money with a threshold value and initiate the third-party analytics request if the amount is greater than the threshold value. In some cases, the third-party analytics request is initiated in response to or in addition to internal analytics performed by the bank, as described below in more detail.

The third-party engine 208 can receive the third-party analytics request via the integration layer 216. In some instances, the third-party analytics request includes the information provided by the customer as part of the transaction request, e.g., receiver name and bank account details. In other cases, the analytics request can include only a portion of the transaction request, e.g., the receiver name or identifier. In some cases, the third-party engine 208 can deconstruct the data provided via the integration layer 216 to determine the appropriate external data sources 212 to query. For example, the third-party engine 208 can make an API call to the selected external data sources 212. Other data may be stored in the third-party system 204 in corresponding data stores (not shown).

In some instances, the external data sources 212 can include data that can be used to verify the legitimacy of the receiver listed on the transaction request. For example, the information provided for the receiver can be compared to information found in databases on incorporated companies. Such data can include one or more of: receiver mailing address, receiver phone number, location comparison, change of banking information, receiver corporate attributes, receiver internet domain information, receiver email, receiver security, historical record of receiver, social media record of receiver, authorized payer history, authorized payer digital fingerprint, corporate officer digital fingerprint, and identification of high value data sources. For instance, this data can be provided by one or more web indexing programs that crawl dark web and open-source information.

The third-party engine 208 can receive the data from the external data sources 212 via the integration layer 216. The third-party engine 208 can reconstruct the data and apply logic rules and/or perform predictive analytics on the data to determine a risk indicator associated with the transaction. In some cases, the risk indicator is determined on demand, i.e., in response to a request sent from the internal system 202. In other cases, the risk indicators may be calculated and stored in a database (e.g. the reporting and storage module 210) and retrieved by the third party system 204 in response to a request sent from the internal system 202. In some instances, the third-party engine 208 can determine a certainty score associated with the transaction risk indicator.

The third-party engine 208 can provide the risk indicator back to the bank to be used for deciding whether to accept, delay and analyze, or stop a transaction. For example, the risk indicator can be displayed via a corresponding graphical user interface 220 to a bank employee and/or the sender. In some instances, a corresponding application within the bank's infrastructure may receive the risk indicator, compare the risk indicator to a threshold value, and generate a notification to a bank employee if the risk indicator is greater than the threshold value. In some cases, the bank may automatically and temporarily block execution of the transaction if the risk indicator is greater than the threshold value. In some cases, the third-party engine 208 can provide contextual information (e.g., data from the database query) in addition to the risk indicator for secondary case management and investigation.

In some instances, the third-party engine 208 can be additionally configured to request information from the bank as to whether the transaction was executed, e.g., deemed to be fraudulent. This information can be used for self-learning to improve the accuracy of the predictive analytics techniques and or risk models used in the third-party engine 208. Examples of AI techniques for updating risk models are supervised and unsupervised learning, self-learning, and active learning. The transaction data can be labeled as fraudulent or non-fraudulent, e.g., by a human user in active learning. The third-party engine 208 can update the risk models using the transaction data and the corresponding labels, e.g., using a supervised learning technique.

As described above, in some cases, the bank initiates a third-party analytics request based on or in addition to internal analytics performed by the bank. For example, the bank can send an internal analytics request at the same time the third-party analytics request is sent. The request can be received by the bank's internal analytics engine 206, which can perform predictive analytics on the transaction data to determine an internal risk indicator associated with the transaction. The internal risk indicator can be combined with the risk indicators or indicators output by the third-party engine 208 to determine an overall risk indicator associated with the transaction. In such cases, the requests for internal analytics and third-party analytics may be initiated in parallel. The risk indicators output by the third-party engine 208 can be summed with the internal risk indicator to obtain a total risk indicator. For example, a particular transaction may be determined to have a low internal risk score, e.g., because the transaction does not appear to be anomalous. However, the third-party engine 208 may output one or more risk indicators that indicate the receiver of the transaction is at a high risk for social engineering. The two indicators can be added to obtain a total risk indicator (e.g., medium risk). In some cases, the risk indicators output by the third-party engine 208 can be given a greater or lesser weight than the internal risk indicator obtained from the internal analytics engine 206.

In other cases, the internal analytics engine 206 can be used to flag suspicious transactions using the bank's existing models. For example, the internal analytics engine 206 can receive data from the bank's transaction history and identify anomalies based on one or more factors such as: receiver location, whether the receiver is a new beneficiary, change of receiver banking information, corporate attributes of the receiver, receiver internet domain information, receiver security, and authorization payer history to name a few examples. The bank may initiate an internal analytics request for all transaction requests and additionally initiate a third-party analytics request for the transactions that are flagged by the internal analytics engine 206.

For example, the described process can be used in the context of detecting fraudulent activity in wholesale payment systems. An enterprise (sender) may use a wholesale payment system, e.g., to facilitate payments to others (receivers) (e.g., suppliers). The wholesale payment system may be operated by a financial institution, such as a bank, that earns fees from processing payments and managing enterprise accounts, for example. As described above, the transactions processed by the wholesale payment system may be susceptible to Authorized Push Payment Fraud, which can include Wholesale Authorized Payment Fraud in some contexts.

Wholesale Authorized Payment Fraud is a form of fraud in which the user of a wholesale payment system is manipulated into making payments to fraudsters. The manipulation may take place via e-mail or phone call, for example. In a first example, the sender may receive a false invoice from a fake organization to induce the sender to authorize a legitimate payment to the fake organization. In such instances, the fake organization may be created specifically for the purpose of defrauding the sender. In other examples, the fraudster may impersonate a real organization and solicit payment for a false invoice. In a further example, the fraudster may impersonate a real organization and provide a legitimate account for receiving payment from the sender. However, the account has been compromised such that the payment money is funnelled to the fraudster's account. In each of these scenarios, the sender authorizes the transaction in a completely legitimate manner and is thus an unwitting participant in the fraud. A risk profile and/or risk indicator for the sender may enable a bank or financial institution to understand the customer and detect potentially fraudulent transactions.

The techniques of the present disclosure can include a three-stage approach. Each of the steps can utilize data from one or more common sources to combat Wholesale Authorized Payment Fraud. In some implementations, the first stage is a prevention stage to mitigate the risk that arises through wholesale payment compromise (e.g., through vulnerability education and remediation). The second stage may include investigating flagged transactions. In some implementations, the transactions may be flagged by the system 200 shown in FIG. 2. For example, if the individual transaction risk rating output by the system 200 of FIG. 2 is above a pre-determined threshold, the transaction may trigger the second stage. The third stage may include real-time transaction risk scoring using the system 200 shown in FIG. 2. Each stage may include an API or user interface that presents information to various stakeholders, such as, relationship managers, executives, education teams, and fraud operation teams to name a few examples.

Some or all of the factors described herein may be used to generate a profile score and/or risk indicator for the sender and receiver, respectively. As described above, predictive analytics may be used to generate the profile score and/or risk indicator. Although six aspects or data sources are described above, some implementations may use fewer or different aspects or data sources for the sender and receiver, respectively. For example, the third-party engine 208 may only query the data sources that are relevant to a particular transaction. The profile may include a qualitative assessment of the organization's exposure to social engineering tactics. The risk indicator may include a quantitative assessment of the organization's exposure to social engineering tactics. In some instances, a profile and a risk indicator are created for both the sender and the receiver. However, some implementations may not include the profile and/or the risk indicator for the receiver.

For example, in some implementations, a risk profile for one or more organizations can be compiled independently of a specific transaction request. According to one process, a bank can send a client roster including corporate clients, authorization payers, and known account owners to the reporting and storage module 210. The reporting and storage module 210 can send a request to search the web and a separate request to gather information from the external databases that are also queried by the third-party engine 208, as described above. The requested information can provide data on one or more individuals, e.g., a sender, receiver, authorized user, or corporate officer. In some instances, the third-party engine 208 can generate a request to an external service provider (not shown) to crawl the dark web for any mention of sales that include receiver or sender information indicating proclivity for compromise. The retrieved data is sent back to the reporting and storage module 210, and the reporting and storage module 210 performs predictive analytics to determine the vulnerability of individuals. Such results can be compiled for several individuals to create a prioritized list and a formalized report identifying high risk clients and associated authorized users. The list can be sent to the bank and used in decision processes in conjunction with the payment transaction requests. In some cases, verified information can be sent to the reporting and storage module 210 to refine the models used for analytics.

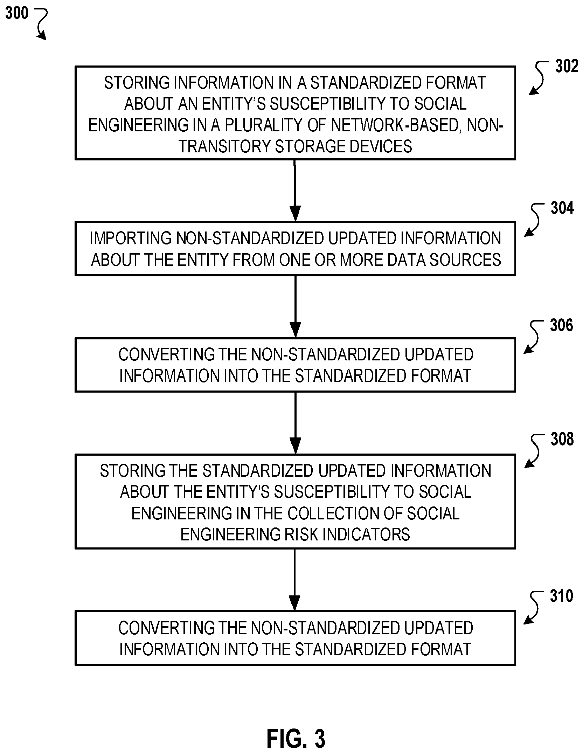

FIG. 3 is a flow diagram of an example process 300 for detecting malicious activity using a combination of transaction and unstructured non-transaction data. The process 300 includes storing information in a standardized format about an organization's susceptibility to social engineering in a plurality of network-based, non-transitory storage devices having a collection of social engineering risk indicators stored thereon (302). In some examples, the standardized format can include a risk profile including a plurality of risk indicators determined according to the techniques described in this disclosure. The risk profile and risk indicators can be used to determine an organization's susceptibility to social engineering and payment fraud. The risk indicators can be based on non-structured raw data in one or more data sources, as described in reference to FIGS. 1 and 2. For example, the one or more data sources can comprise non-transaction data sources.

The process 300 can include importing, using an integration layer, non-standardized updated information about the organization from one or more data sources (304). The risk profile and risk indicators can be updated periodically based on updated information from the one or more data sources. For example, the non-standardized updated information about the organization can be imported from one or more data sources based on a pre-determined schedule. When the non-standardized updated information includes information from at least two data sources, the updated information can be imported from each of the at least two data sources based on a different pre-determined schedule. For example, the data from a first data source can be updated frequently (e.g., in real-time), while the data from a second data source can be updated less frequently (e.g., on a quarterly basis). In some cases, the process 300 includes receiving, via the integration layer, a request for updated information about the organization, and the non-standardized updated information about the organization is imported from one or more data sources in response to the request. As previously described, updated information can be requested in response to notifications from an event monitoring service that provides information about one or more organizations.

In some cases, importing updated information about the organization from one or more data sources can include receiving a transaction request related to the organization, and selecting appropriate data sources to query based on the transaction request. For instance, the transaction request may include the name of the organization, and one or more data sources may be selected based on the particular organization. In another example, the transaction can originate from a particular location and/or be sent to a particular location. Data sources that include information for these locations can be queried based on the transaction data.

The process 300 can include converting, using a first analytics engine, the non-standardized updated information into the standardized format (306). For example, the analytics engine can be the analytics engine 101 or the analytics engine 208 as described in reference to FIGS. 1 and 2, respectively. The first analytics engine can be configured to apply logical rules and/or analytics techniques to the raw data to determine one or more updated risk indicators according to implementations of the present disclosure. The updated risk indicators can be saved to the existing risk profile.

The process 300 can include storing the standardized updated information about the organization's susceptibility to social engineering in the collection of social engineering risk indicators (308). In some implementations, the risk profiles can be stored in a storage module such as the reporting and storage module 210 of FIG. 2. The risk profiles can be updated and stored asynchronously to the operations of a second analytics engine described below.

The process 300 can include transmitting, via the integration layer, the standardized updated information for one or more organizations to the second analytics engine configured to determine a transaction risk indicator for a transaction (310). For example, the integration layer may be connected to the storage module described above. The second analytics engine can use the risk profile to identify malicious activity based on a combination of transaction and non-transaction data. In some examples, the process 300 includes performing an action based on the transaction risk indicator, e.g., temporarily blocking the transaction when the transaction risk indicator exceeds a risk threshold. In some cases, the process 300 further includes transmitting, via the integration layer, the standardized updated information for one or more organizations for display on a user interface.

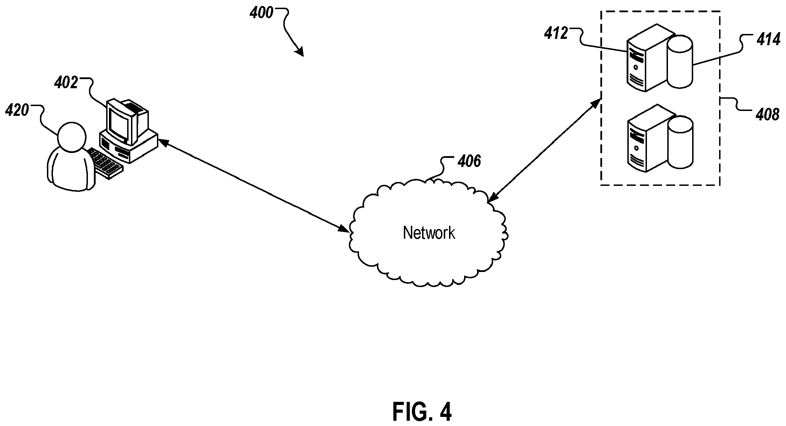

FIG. 4 depicts an example system 400 that can execute implementations of the present disclosure. The example system 400 includes a computing device 402, a back-end system 408, and a network 406. In some examples, the network 406 includes a local area network (LAN), wide area network (WAN), the Internet, or a combination thereof, and connects web sites, devices (e.g., the computing device 402), and back-end systems (e.g., the back-end system 408). In some examples, the network 406 can be accessed over a wired and/or a wireless communications link.

In some examples, the computing device 402 can include any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices.

In the depicted example, the back-end system 408 includes at least one server system 412, and data store 414 (e.g., database and knowledge graph structure). In some examples, the at least one server system 412 hosts one or more computer-implemented services that users can interact with using computing devices. For example, the server system 412 can host one or more applications that are provided as part of a system for detecting malicious activity in accordance with implementations of the present disclosure.

In some examples, the back-end system 408 hosts a system for detecting malicious activity using a combination of transaction and unstructured non-transaction data in accordance with implementations of the present disclosure. For example, a user 420 can interact with the system using the computing device 402. In some examples, the user 420 can decide whether to accept, delay and analyze, or stop a transaction flagged by the system, as described in further detail herein. In some examples, the user 420 can compile risk profiles for one or more organizations, as described in further detail herein.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products, i.e., one or more modules of computer program instructions encoded on a computer readable medium for execution by, or to control the operation of, data processing apparatus. The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random access memory or both. Elements of a computer can include a processor for performing instructions and one or more memory devices for storing instructions and data. Generally, a computer will also include, or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A computer-implemented method comprising:
storing information in a standardized format about an organization's susceptibility to social engineering in a plurality of network-based, non-transitory storage devices having a collection of social engineering risk indicators stored thereon;
importing, using an integration layer, non-standardized updated information about the organization from one or more data sources;
converting, using a first analytics engine, the non-standardized updated information into the standardized format;
storing the standardized updated information about the organization's susceptibility to social engineering in the collection of social engineering risk indicators; and
transmitting, via the integration layer, the standardized updated information for one or more organizations to a second analytics engine configured to determine a transaction risk indicator for a transaction.

2. The method of claim 1, wherein the one or more data sources comprise non-transaction data sources.

3. The method of claim 1 or 2, further comprising receiving, via the integration layer, a request for updated information about the organization, wherein the non-standardized updated information about the organization is imported from one or more data sources in response to the request.

4. The method of claim 1, 2 or 3, wherein the non-standardized updated information about the organization is imported from one or more data sources based on a pre-determined schedule.

5. The method of claim 4, wherein the non-standardized updated information comprises information from at least two data sources, and wherein updated information is imported from each of the at least two data sources based on a different pre-determined schedule.

6. The method of any of the preceding claims, further comprising performing an action based on the transaction risk indicator.

7. The method of claim 6, wherein performing the action comprises temporarily blocking the transaction when the transaction risk indicator exceeds a risk threshold.

8. The method of any of the preceding claims, further comprising receiving a transaction request related to the organization, wherein importing non-standardized updated information about the organization from one or more data sources comprises selecting one or more data sources to query based on the transaction request.

9. Computer-readable storage media coupled to one or more processors and having instructions stored thereon which, when executed by the one or more processors, cause the one or more processors to perform the method of one or more of the preceding claims.

10. A system, comprising:
one or more processors; and
a computer-readable storage device coupled to the one or more processors and having instructions stored thereon which, when executed by the one or more processors, cause the one or more processors to perform operations comprising:
storing information in a standardized format about an organization's susceptibility to social engineering in a plurality of network-based, non-transitory storage devices having a collection of social engineering risk indicators stored thereon;
importing, using an integration layer, non-standardized updated information about the organization from one or more data sources;
converting, using a first analytics engine, the non-standardized updated information into the standardized format;
storing the standardized updated information about the organization's susceptibility to social engineering in the collection of social engineering risk indicators; and
transmitting, via the integration layer, the standardized updated information for one or more organizations to a second analytics engine configured to determine a transaction risk indicator for a transaction.

11. The system of claim 10, wherein the one or more data sources comprise non-transaction data sources.

12. The system of claim 10 or 11, the operations further comprising receiving, via the integration layer, a request for updated information about the organization, wherein the non-standardized updated information about the organization is imported from one or more data sources in response to the request.

13. The system of claim 10, 11 or 12, wherein the non-standardized updated information about the organization is imported from one or more data sources based on a pre-determined schedule, wherein, optionally, the non-standardized updated information comprises information from at least two data sources, and wherein updated information is imported from each of the at least two data sources based on a different pre-determined schedule.

14. The system of any of claims 10 to 13, the operations further comprising performing an action based on the transaction risk indicator, wherein, optionally, performing the action comprises temporarily blocking the transaction when the transaction risk indicator exceeds a risk threshold.

15. The system of any of claims 10 to 14, the operations further comprising further comprising receiving a transaction request related to the organization, wherein importing non-standardized updated information about the organization from one or more data sources comprises selecting one or more data sources to query based on the transaction request.
